# EUROPEAN PATENT APPLICATION

(11) **EP 2 887 745 A1**
(43) Date of publication of application: **24.06.2015**
(21) Application number: 13198061.7
(22) Date of filing: 18.12.2013
(51) Int. Cl.: H04W 48/12, H04W 8/18, H04W 76/00, H04W 88/06, H04W 48/18

(54) **Method and device for fast selection of network identity**

(71) Applicant: Gemalto M2M GmbH, 81541 München (DE)
(72) Inventor: Simon, Carsten, 16761 Hennigsdorf (DE)
(74) Representative: Grevin, Emmanuel

(57) **Abstract**

It is suggested a method for operation of a mobile device for wireless communication, said mobile device comprising a storage unit (4), and said mobile device being such that:
- a plurality of identity records for registering to a wireless communication network are accessible for the mobile device and
- the mobile device is registered to a first wireless communication network by means of one first identity record of said plurality of identity records, said method comprising the following steps:
- receiving, from said first wireless communication network, information concerning at least one indication record which comprises access information for a second wireless communication network, wherein said second wireless communication network is capable of supporting at least one specific network based service, and
- storing said at least one indication record in said storage unit, said method further including the steps of:
- when the specific network based service is requested, abandoning said first wireless communication network, and
- initiating a network acquisition process to said second wireless communication network by using said at least one indication record stored in said storage unit (4) and one second identity record of said plurality of identity records.

## Description

### Technical field / problem to solve

The invention relates to a mobile device and a method for operation of the mobile device configured to communicate within a wireless communication network where the mobile device is capable of handling a plurality of network related identities, as well as said wireless communication network.

Said mobile device is configured to change between at least two of the plurality of identities. In certain situations the time for registering to a new wireless communication network with a new identity requires far too much time. This is in particular true for identities that are designed for a commonly accessible network related service like an emergency call service for cars. Such a mobile device which is designed to support emergency call, is part of a car by way of a telematics or emergency call unit. For the emergency call it requires to change the wireless communication network registration from a commercial network identity to an emergency call identity. If this procedure requires one or more seconds delay until the emergency call can be launched this would be critical for performing the network related service, and therefore to save health and life of the passengers of the car.

### Prior art

To solve that problem presently known approaches require the following steps to be performed. These steps are performed sequentially:
1. Mobile device deactivates commercial identity, subscription resp. SIM card
2. Mobile devices abandons the current wireless communication network
3. Mobile device activates second identity, subscription resp. SIM card
4. Mobile device scans for all accessible technologies (2G, 3G, 4G, ...) all bands for presence of power sufficient for accessing a new wireless communication network supporting the emergency service
5. For those bands / frequencies detected in step 4 mobile device tries to synchronize with wireless communication network
6. For those wireless communication networks detected in step 5 mobile device tries to decode wireless communication network and receive PLMN code
7. Found wireless communication networks are compared to a list of prioritized wireless communication networks stored in the mobile device, in particular the SIM card, and the detected wireless communication network with highest priority is selected
8. For the selected wireless communication network the technology and frequency used by the wireless communication network is chosen for synchronization of the mobile device and preparation of the registration
9. Mobile device registers to wireless communication network with second subscription
10. Optionally check if wireless communication network supports desired services, provided it was not detectable in step 7
11. Network based service is initiated, in particular emergency call is executed

Due to the fact that before starting to register with the second subscription or identity the mobile device did not maintain any information about the previously used wireless communication network and potential knowledge about accessing other wireless communication networks, this leads to a process which can under certain circumstances have a duration of one minute or more. It is obvious that not only for security or emergency related use cases this delay time is far too long.

### The invention

It is therefore a goal of present invention to suggest a solution which reduces the required lead time until the mobile device is ready to access the wireless communication network providing a specific service, in particular to use the network based service.

To reach this it is proposed a method for operation of a mobile device for wireless communication according to claim 1. Further to reach the goal it is suggested a mobile device according to claim 5. Further to reach the goal it is suggested a wireless communication network according to claim 9.

It is according to a first aspect of the invention proposed a method for operation of a mobile device for wireless communication, said mobile device comprising a storage unit, and said mobile device being such that:
- a plurality of identity records for registering to a wireless communication network are accessible for the mobile device and
- the mobile device is registered to a first wireless communication network by means of one first identity record of said plurality of identity records, said method comprising the following steps:
- receiving, from said first wireless communication network, information concerning at least one indication record which comprises access information for a second wireless communication network, wherein said second wireless communication network is capable of supporting at least one specific network based service, and
- storing said at least one indication record in said storage unit, said method further including the steps of:
- when the specific network based service is requested, abandoning said first wireless communication network, and
- initiating a network acquisition process to said second wireless communication network by using said at least one indication record stored in said storage unit and one second identity record of said plurality of identity records.

The suggested method starts from a mobile device for wireless communication which is a device that is capable of accessing wireless communication networks, including mobile phones or other devices that comprise a wireless communication unit, e.g. Ecall boxes or telematic resp. navigation system units within cars. Such wireless communication networks according to the invention are cellular networks that are capable of handling wireless communication according to wireless communication standards, in particular GSM, GPRS, EDGE, UMTS, WCDMA, CDMA, LTE or others. It consists at least of a plurality of network nodes, like base stations, NodeBs or eNodeBs.

The mobile device consists at least of certain components which can be incorporated separately or some components can bear more than one of the described units. For the purpose of the invention, the mobile device comprises a storage unit. It is further advantageous to conduct the communication with said wireless communication networks by means of a wireless communication unit.

A wireless communication unit is a hardware unit that comprises all components for communicating with network nodes of a wireless communication network. Typically a wireless communication unit is designed as a machine-to-machine (M2M) module which can be incorporated in any device and is controllable by a well defined interface like an AT interface. In such scenario the wireless communication unit is coupled with an application control unit. The application control unit is part of a mobile device that performs control steps, like a processor. This application control unit can alternatively be part of a wireless communication unit, but also an application processor in the device outside of the M2M module.

A storage unit is any type of permanent storage memory. Typically this is incorporated in the wireless communication unit, but also it can be situated in the device outside of the M2M module. Preferably the mobile device is composed of a machine-to-machine module combined with an application device.

Further it is advantageous to have an identification unit accessible for the mobile device. This is a unit which is capable of storing information regarding network related identities of the user. This is usually stored in a secured environment, as it is provided by an UICC, in particular an USIM, SIM, solderable SIM, a UIM resp. R-UIM (for CDMA) or in a secured software unit accessible by the wireless communication unit.

It is further advantageous to incorporate the storage unit in the identification unit.

According to the invention it is further proposed that the mobile device is configured to contain a plurality of identity records which are used for registering to at least a wireless communication network. Such identity records include all information regarding network related identities. Within the identity record typically information like an identifier, e.g. an IMSI or an MSISDN, are stored. On the side of the wireless communication network a database (HLR) is usually available which stores for each identity at least the allowed/subscribed network related services. Preferably such identity record is designed as a subscription or profile stored on an identification unit, preferably a SIM or the like.

It is further assumed that the mobile device is registered to a first wireless communication network by means of one of the plurality of identity records. With respect to this registration step the mobile device acts like a normal standard compliant mobile device.

In the next step the mobile device receives from current wireless communication network information concerning at least one indication record which comprises access information for a second wireless communication network. It is already known that a wireless communication network provides information describing the network itself, this is known in particular under the term system information and already defined in GSM standard TS 04.08 (3GPP TS 04.08 V7.20.0 (2003-07), sect. 9.1.31ff, page 282ff). Now the suggested wireless communication network according to claim 9 is capable of providing such access information regarding a second wireless communication network, the latter is moreover capable of supporting at least one specific network based service. Such an indication record comprises a multitude of information related to access information for the wireless communication network associated to the indication record.

This indication record preferably indicates which wireless communication networks are capable of providing said network based service or which network based services are provided by which wireless communication networks.

Said network based service can be any type of service using wireless communication network related capabilities. A typical example is an emergency call service (Ecall), like defined from the eSafety initiative defined by the European Commission (EC), as it requires that the wireless communication network has access to a public safety answer point (PSAP) which is usually an authority comprising a call center, where local emergency services can be sent to a location where the emergency situation happened. After receiving said information the mobile device is configured to store said at least one indication record in the storage unit accessible by the mobile device. It is further preferable to store additional information with said at least one indication record, such as information concerning the network based service itself, and/or information regarding a timestamp of the data. Further it is advantageous to check if such access information is already stored. The stored access information is overwritten with received access information when they derive from previously stored access information. Further the timestamps are compared and only then when previously stored access information has reached a certain age, the stored access information is overwritten. Further it is preferred to analyse if previously stored information relate to a different wireless communication network, different location are and/or different cell of said wireless communication network. It is therefore possible and advantageous that this step of receiving and storing such information is repeated regularly or on event.

Now any type of trigger indicates to the inventive mobile device the necessity to switch the subscription resp. identity. It is possible that this trigger is initiated by the application device. In one advantageous embodiment this trigger is an emergency situation detected by a car, where the mobile device is incorporated, or initiated by the user. In general it is up to the wireless communication unit to define necessity for a certain service and switch subscriptions accordingly, e.g. bulk downloads of maps for navigation systems.

If the switch is triggered the mobile device abandons the current wireless communication network. This can be done by a common deregistration procedure. However this can be disadvantageous as the deregistration procedure takes some time, due to the fact that it requires some data exchange between wireless communication network and mobile device. Therefore a quicker solution would be to simply shut down the communication between the mobile device and the current wireless communication network in order to immediately start a registration to the new wireless communication network. Dependent upon the likelihood for launching the network related service and the urgency it can be decided to use the faster step, or the first one which better complies with behaviour expected by wireless communication networks.

Regardless of how the wireless communication network was abandoned, the mobile device can now initiate a network acquisition process to the new wireless communication network by using said stored indication record - or one of the plurality of stored indication records - plus one second identity record of the stored plurality of identity records. The network acquisition process comprises those steps that are usually attempted to access a certain wireless communication network by means of its network node, that means search of cell, analysis of cell configuration and the like. After this process the mobile device is in a position to provide said at least one identity records to the wireless communication network to allow an identification and authentication on the side of the wireless communication network.

With the included access information the network acquisition is much quicker than a normal network acquisition procedure as described for the known methods. In particular it is not required to scan for different wireless communication networks and in particular find out after certain communication or even a completed network acquisition attempt that in this wireless communication network the second identity is not accepted, and/or that the network based service is not supported.

Which access information relating to a wireless communication network are stored and used for network acquisition is arbitrary. It is preferable to use such information which are helpful for a mobile device, in particular wireless communication unit, to quickly access this wireless communication network. Such access information can comprise at least one of:
- wireless technology, in particular GSM, EDGE, GPRS, WCDMA, CDMA, LTE used by accessible wireless communication network
- Frequency and/or band and/or channel (e.g. for CDMA) for access of wireless communication network
- PLMN Code, in particular MCC, MNC and/or area code of accessible wireless communication network, and
- Network and/or cell related system information, necessary to physically access the wireless communication network e.g. System Information 3 or 4 in GSM or equivalent System Information blocks in UMTS, including cell identity, cell selection parameters and/or location area identification,
- Priority information for network based service assigned to accessible wireless communication network.

Depending upon the architecture of the wireless communication network and the network based service the network acquisition process can include the identification and authentication process as well as the registration process as known from wireless technology standards.

After network acquisition process was successfully completed the network based service can be initiated. This is typically originated by the mobile device, in particular in case of an emergency call, where the emergency call is started from the mobile device. Then after the call is accepted by the PSAP, a minimum set of data (MSD) is provided to the PSAP and after that a voice connection is established.

In a further advantageous embodiment it is suggested that at least the second identity record is assigned to one specific wireless communication network. This means that there is at a given location only one wireless communication network available which can be accessed with the second identity record, which is designed for accessing said network based service. However it is possible that more than one identity record is stored in the mobile device, in particular the identification unit.

This embodiment is further designed that way that the specific wireless communication network the second identity record is assigned to may be the same wireless communication network as the first wireless communication network the mobile device is registered to before the process of abandon and network acquisition is initiated. In this case it is more or less only a change of identity which nevertheless requires an abandon, in particular an deregister from the previous identity before the new identity, which is preferably designed for allowing the access to the network based service, is registered.

According to a second aspect of the invention it is proposed a mobile device for wireless communication, comprising a storage unit, wherein
- the mobile device is configured to register to a wireless communication network by means of a first identity record of a plurality of identity records accessible for the mobile device and
   wherein the mobile device is configured
- to receive, from a first wireless communication network where the mobile device is registered to, at least one indication record which comprises access information for a second wireless communication network, this second wireless communication network being capable of supporting at least one specific network based service, and

- to store said received indication record in said storage unit,
   said mobile device being further configured:
- when the specific network based service is requested, to abandon registration to said first wireless communication network, and
- to initiate a network acquisition process to said second wireless communication network by using said at least one indication record stored in said storage unit and one second identity record of said plurality of identity records.

The mobile device of the second aspect of the present invention shares the advantages achieved with the operating method of the first aspect of the invention.

In another advantageous embodiment the suggested mobile device is configured to store identity records in an identification unit.

As it is foreseen to store at least two identity records, there are different approaches to achieve this, in particular when the identification unit is designed as an UICC, USIM, SIM or similar. In a first approach the identification unit is configured to store more than one identity record. Usually such identification units carry exactly one identity record, moreover when an IMSI or MSISDN is part of the identity record. Here it is advantageous to have one identity record e.g. for a commercial use and one other identity record - in particular with differing IMSI and/or MSISDN - for the network based service, in particular security services like emergency call, which are supposed to be available for each user.

In a second approach the mobile device is configured to have access to more than one identification units. As such these identification units are configured to store only one identity record. The mobile device is then able to decide which identification unit is for normal use, and which identification unit is for use of the network based service.

According to a third aspect of the invention it is suggested a wireless communication network comprising a plurality of communication nodes, said wireless communication network being configured to transmit at least one indication record comprising access information for a wireless communication network which is capable of supporting at least one specific network based service.

For said transmission of indication records it is preferred to transmit such information repeatedly in particular regularly. Hence it is advantageous to use already existing channels, in particular broadcast channels, like cell broadcast (CB), or system information blocks (SIB).

Further it is in another preferred embodiment suggested that the indication record is transmitted from the wireless communication network upon request from the mobile device. For this any type of communication channels between wireless communication network and mobile device are usable, typically a dedicated channel is used to transmit the indication record from to the requesting mobile device.

A combination of both embodiments is further suggested, which means that the access information are broadcast repeatedly, but the mobile device can additionally request them, in particular when they are needed. This can in particular be the case when said trigger - e.g. an emergency detection - initiates access to the network based service. This is in particular advantageous in that case that the mobile device did not yet receive indication record, or is aware that the stored indication record is outdated.

Further it is preferred that suggested wireless communication network is configured to transmit a plurality of indication records, in particular at least two indication records that relate to at least two different wireless communication networks. This is advantageous for situations where the network based service is available in at least two different wireless communication networks. This is in particular helpful when in case of emergency situations one of the wireless communication networks, which support the network based service, in particular the emergency call service, should not be available due to a dead spot at that location or an outage. So suggested mobile device is able to select in case of a failed emergency call on that particular wireless communication network another wireless communication network, where the access information is based on the related indication records also available.

In a further preferred embodiment suggested wireless communication network is configured to transmit said indication record by means of an iterative transmission, this means in particular that during one transmission only differences to at least one previous transmission are sent. This is in particular advantageous if the mobile device is moving through the wireless communication network. When another subunit of the wireless communication network, in particular a cell or location area or other network related region like a tracking area or routing area, is reached the mobile device receives from said wireless communication network information regarding a change of indication records. This situation is detected by the wireless communication network by means of area update messages it regularly receives from all registered mobile devices. Such an area update messages is initiatively sent by the mobile device and consists of information relative to the cell and its location, tracking or routing area, where the mobile device is camping on. The information relative to a change of indication records refers in particular rather to system information like frequencies, cell identities etc. Information regarding the wireless communication network itself, like PLMN code, will therefore change rather seldom, and can therefore be omitted in such iterative transmissions. It is advantageous that after a certain amount of iterative transmissions one complete set of indication records is transmitted again.

It is further possible that the transmission of indication records is done by way of a broadcast, in particular by Cell Broadcast mechanisms. In this case the wireless communication network is not aware which mobile devices already received the transmitted information. In this case there is no room for an iterative approach.

### Detailed example

The invention will now be described in detail with the accompanying drawing. This description covers only preferred embodiments of the invention, but is not intended to limit the scope of the invention.
- Figure 1: shows a scheme of an exemplary mobile device
- Figure 2: shows the flowchart diagram of an exemplifying process according to prior art
- Figure 3: shows the flowchart diagram for the same process according to the invention.

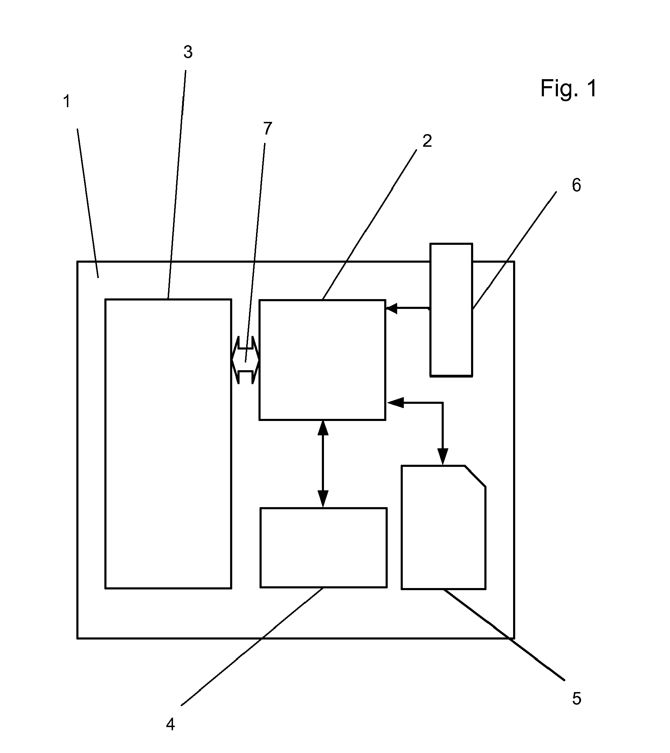

A respective exemplifying mobile device is shown as a scheme in Fig. 1, wherein the components of the mobile device 1 are shown schematically exemplifying separated, however, can be implemented together in one unit or also can be further divided or separated depending on the demands of the instant periphery of the mobile device. Also the mobile device 1 is only an example for the hardware or software outlined above.

The mobile device 1 according to the exemplifying scheme comprises the following components:
The wireless communication unit 2 is responsible for setting up wireless communication with the wireless communication network, in particular the radio frequency (RF) tasks are executed in this component. Typically such a wireless communication unit 2 is implemented as a so-called M2M (machine-to-machine) or MTC (machine type communication) module. Further the mobile device 1 comprises an application control unit 3 which controls all or at least the main activities of the mobile device 1. This is typically the central processing unit, regardless if other auxiliary processors or further components with own processors are available. The application control unit 3 has in this exemplary mobile device 1 access to the wireless communication unit 2 by virtue of an AT-interface 7. Other ways of interfacing the wireless communication unit 2 are of course possible.

Further the mobile device 1 comprises a storage unit 4. This is configured for storing at least a plurality of indication records received through a wireless communication network and that include at least a set of required access information for accessing another wireless communication network. It is obvious that other components, in particular the application control unit 3 has access to the storage unit 4 and is allowed to read and write to the storage unit 4. It is further thinkable that other components like the wireless communication unit 2 has at least limited access to the storage unit 4 as well, as such read access and write access in the inventive method are executed by different components.

Further the mobile device 1 comprises an identification unit 5. This identification unit 5 is at least responsible for storing the identity records which is the subscription of the user to one or more wireless communication networks. The identification unit 5 is in this example a SIM-card, which is attached to the mobile device 1 by means of a SIM card slot (not shown), provided it is a removable SIM card. By this way the identification unit 5 is accessible for the wireless communication unit 2. The application control unit 3 has access to the identification unit 5 via the wireless communication unit 2.

Finally an antenna 6 is comprised in the mobile device 1, the antenna 6 typically connected to the mobile device 1 and is accessible for the wireless communication unit 2.

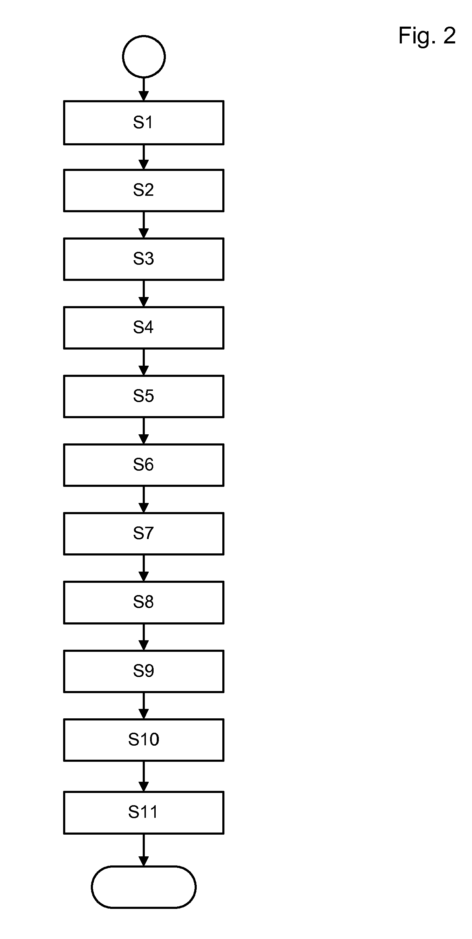

Fig. 2 shows a flow chart for an exemplary mobile device 1 which is capable of setting up an emergency call, which steps are to be taken according to the prior art to execute an emergency call. The flow chart assumes that the mobile device 1 is registered in a wireless communication network which is not capable of accepting emergency calls. The mobile device 1 has therefore upon request for an emergency call to switch to a wireless communication network with the required capabilities. When such an emergency call is triggered e.g. automatically by detecting a crash or an airbag deployment, step S1 is taken. Here the mobile device 1 deactivates its current, usually commercial subscription.

In the next step S2 the mobile device 1 abandons the current wireless communication network. The abandoning can be done be a common deregistration procedure or by simply ending communication with the current wireless communication network and move on to next step S3. Here the mobile device 1 activates a second subscription which is accessible on the identification unit 5. This is typically the emergency call subscription which is free of cost and available for each user even if a commercial subscription is not available (e.g. due to uncharged prepaid account).

Now in step S4 the mobile device 1 scans for all accessible (and supported) technologies like 2G, 3G, 4G etc. and all bands for the presence of power sufficient for accessing and maintaining a communication with a wireless communication network. After this scan a set of frequencies resp. bands is available which can be examined in the next step. If no such band is found, e.g. in an area with no sufficient coverage, the procedure would stop here. Due to the fact that in this exemplifying process it is assumed that at least the previously used wireless communication network is available, here no decision point is drawn in Fig. 2. Based on the collected frequencies / bands the mobile device 1 picks in step S5 a first one and tries to synchronize with the wireless communication network. This is done for all bands and such it can be figured out to which wireless communication network the mobile device 1 can synchronize. In step S6 the mobile device 1 for all wireless communication networks with positive result from step S5 tries to decode and receive the PLMN code and the area code. With this the mobile device 1 can distinguish the different wireless communication networks. Further in step S7 the received information concerning decodable wireless communication networks are compared with a list of prioritized wireless communication networks stored in the mobile device 1, in particular the identification unit 5 resp. the SIM card. By this the mobile device 1 picks one of the decodable wireless communication networks according to said prioritized wireless communication network list, that is in the first step the wireless communication network with the highest priority.

Now in step S8 one of the available technologies and frequencies for the selected wireless communication network is chosen, usually representing the highest technology and the mobile device 1 now prepares for network acquisition of this wireless communication network. The network acquisition is performed in step S9. Optionally it can now be checked if the registered wireless communication network supports the desired network related service, if this information is not already available (e.g. in the prioritized list used in step S7). This requires network communication regarding the available network related services. For this a request is sent to the wireless communication network and it has to be waited for a response.

If the wireless communication network is capable of supporting emergency call service then in step S11 the emergency call is initiated, that is a call is setup to the emergency call PSAP.

The description of the prior art process to launch an emergency call shows how disadvantageous the currently known process is. The disadvantages of the known process are mitigated through the inventive method.

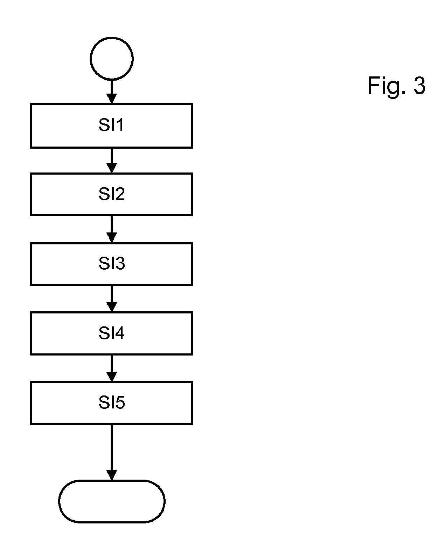

Here the steps necessary to be executed in order to launch an emergency call are shown in Fig. 3. This is based on the mobile device 1 already registered to a wireless communication network. According to the invention this wireless communication network provided previously regularly during the normal interaction with the mobile device 1 indication records. Those indication records comprise the required access information for accessing available wireless communication networks that support the requested network based service, here the emergency call. These indication records are stored in the storage unit 4 of the mobile device 1.

Now the emergency call is triggered like described above automatically or manually. First in step SI1 the current identity or subscription is deactivated. In the next step SI2 the mobile device 1 abandons the current wireless communication network. This can be done like in the known process described above. Unlike steps S4 to S8 in Fig. 2 it is according to the inventive method not required to find an appropriate wireless communication network, it is read (step SI3) the stored indication record from storage unit 4. It does not matter if these information are read from application control unit 3 or the wireless communication unit 2. The more information are available in the indication record the less steps are conducted to then conduct a network acquisition in step SI4 to the selected wireless communication network. Finally in steps SI5 now the network based service - here: the emergency call - can then be launched in the now attached wireless communication network.

The time consuming step of detecting which wireless communication network is available and capable of supporting the desired network based service and how to access this wireless communication network is completely omitted. Instead the step of accessing the network based service can be started without material delay.

### Reference number list

- 1: Mobile device
- 2: Wireless communication unit
- 3: Application control unit
- 4: Storage unit
- 5: Identification unit
- 6: Antenna
- 7: AT-Interface

## Claims

**1.** Method for operation of a mobile device (1) for wireless communication, said mobile device (1) comprising a storage unit (4), and said mobile device (1) being such that:
- a plurality of identity records for registering to a wireless communication network are accessible for the mobile device (1) and
- the mobile device (1) is registered to a first wireless communication network by means of one first identity record of said plurality of identity records, said method comprising the following steps:
- receiving, from said first wireless communication network, information concerning at least one indication record which comprises access information for a second wireless communication network, wherein said second wireless communication network is capable of supporting at least one specific network based service, and
- storing said at least one indication record in said storage unit (4), said method further including the steps of:
- when the specific network based service is requested, abandoning said first wireless communication network, and
- initiating a network acquisition process to said second wireless communication network by using said at least one indication record stored in said storage unit (4) and one second identity record of said plurality of identity records.

**2.** Method according to claim 1,
wherein network based service is an emergency service, said request for the specific network based service being triggered upon manual or automatic detection of an emergency situation.

**3.** Method according to claim 1 or 2,
wherein second identity record is associated to said first wireless communication network.

**4.** Method according to at least one of the claims 1 to 3,
wherein, after successful initiating of the network acquisition process to said second wireless communication network, a communication related to said network based service is initiated.

**5.** Mobile device for wireless communication,
comprising a storage unit (4),
wherein
- the mobile device (1) is configured to register to a wireless communication network by means of a first identity record of a plurality of identity records accessible for the mobile device and
wherein the mobile device (1) is configured
- to receive, from a first wireless communication network where the mobile device (1) is registered to, at least one indication record which comprises access information for a second wireless communication network, this second wireless communication network being capable of supporting at least one specific network based service, and
- to store said received indication record in said storage unit (4),
said mobile device (1) being further configured:
- when the specific network based service is requested, to abandon registration to said first wireless communication network, and
- to initiate a network acquisition process to said second wireless communication network by using said at least one indication record stored in said storage unit (4) and one second identity record of said plurality of identity records.

**6.** Mobile device according to claim 5,
comprising at least one identification unit (5) configured to store said plurality of identity records.

**7.** Mobile device according to claim 5
comprising at least two identification units (5), wherein each identification unit (5) is configured to store at least one identity record.

**8.** Mobile device according to claim 6 or 7,
wherein said identification unit (5) is an integrated circuit card selected from the group consisting of UICC, USIM and SIM.

**9.** Wireless communication network
comprising a plurality of communication nodes, said wireless communication network being configured to transmit at least one indication record comprising access information for a wireless communication network which is capable of supporting at least one specific network based service.

**10.** Wireless communication network according to claim 9
wherein said indication record is transmitted upon reception of a request from a mobile device (1).

**11.** Wireless communication network according to claim 9,
configured to:
- detect a registered mobile device (1) changing between subunits of the wireless communication network out of a group comprising a cell associated to one of the plurality of communication nodes and a location area, a routing area and a tracking area each consisting of a plurality of cells,
- upon detection transmit said indication record.

**13.** Wireless communication network according to at least one of the claims 9 to 11
wherein access information of said indication record comprise at least one selected from the group comprising:
- wireless technology information used by wireless communication network which is capable of supporting at least one specific network based service,
- frequency and/or band and/or channel for access to the wireless communication network which is capable of supporting at least one specific network based service,
- Network and/or cell related system information of the wireless communication network which is capable of supporting at least one specific network based service,
- PLMN Code, MCC, MNC and/or area code of the wireless communication network which is capable of supporting at least one specific network based service, and
- priority information for network based service assigned to the wireless communication network which is capable of supporting at least one specific network based service.

**14.** Wireless communication network according to at least one of the claims 9 to 13,
configured to transmit a plurality of indication records, wherein at least two of said plurality of indication records relate to two different wireless communication networks which are capable of supporting at least one specific network based service.

**15.** Wireless communication network according to at least one of the claims 9 to 14,
wherein said access information consist of changes related to access information of previously transmitted indication record.

**16.** Wireless communication network according to at least one of the claims 9 to 15,
wherein said access information are retrieved from a service provider connected to the first wireless communication network.
